(19) Europäisches Patentamt
European Patent Office
Office européen des brevets

(11) **EP 4 580 173 A1**

(12) **EUROPEAN PATENT APPLICATION**
published in accordance with Art. 153(4) EPC

(43) Date of publication:
**02.07.2025 Bulletin 2025/27**

(21) Application number: **22958422.2**

(22) Date of filing: **15.09.2022**

(51) International Patent Classification (IPC):
**H04N 5/222** (2006.01)   **G06T 5/00** (2024.01)

(52) Cooperative Patent Classification (CPC):
**G06T 5/00; H04N 5/222**

(86) International application number:
**PCT/CN2022/118958**

(87) International publication number:
**WO 2024/055229 (21.03.2024 Gazette 2024/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventor: **WANG, Kuanglei
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **IMAGE PROCESSING METHOD, APPARATUS, AND SYSTEM, AND INTELLIGENT DEVICE**

(57) This application provides an image processing method, apparatus, and system, and is applicable to the fields such as intelligent vehicles, intelligent terminals, and smart homes. The method includes: obtaining first image data output by an ISP, where the first image data is obtained by the ISP by processing raw image data based on a target ISP parameter group, and the first image data is used for a first service; obtaining second image data based on the first image data, where a data volume of the second image data is greater than or equal to a data volume of the first image data and is less than or equal to a data volume of the raw image data; and obtaining third image data based on the second image data, where the third image data is used for a second service. In the solutions of this application, the first image data that is output by the ISP and that is used for the first service is processed to obtain the third image data that can be used for the second service, to increase a quantity of services supported by the ISP.

400

```
S410: Obtain first image data output by an ISP, where the first image
data is used for a first service
            |
            v
S420: Obtain second image data based on the first image data
            |
            v
S430: Obtain third image data based on the second image data, where
the third image data is used for a second service
```

FIG. 4

EP 4 580 173 A1

## Description

### TECHNICAL FIELD

This application relates to the image processing field, and more specifically, to an image processing method, apparatus, and system, and an intelligent device.

### BACKGROUND

A main function of an image signal processor (image signal processor, ISP) is to process raw image data obtained by a front-end image sensor, and then transmit processed image data to a human vision (human vision, HV)-related service or a computer vision (computer vision, CV)-related service for use. The ISP usually includes a plurality of data channels, and each data channel includes one ISP parameter group. The ISP parameter group needs to be configured based on an actual application service.

Generally, different services have different requirements on image quality indicators, and an ISP parameter group configured for a service may not satisfy use of another service. For example, an ISP parameter group that is obtained through optimization by using a subjective assessment of a person as an indicator and that is applicable to the HV-related service may not satisfy use of the CV-related service. In a conventional solution, different ISP parameter groups are usually configured for different data channels of the ISP, so that image data output by the ISP based on the different ISP parameter groups can be used for different services. However, because one data channel can correspond to only one ISP parameter group, and a quantity of data channels is limited by a bandwidth of the ISP, services supported by the ISP are limited by the quantity of data channels.

Therefore, how to increase a quantity of services supported by the ISP is a technical problem that urgently needs to be resolved.

### SUMMARY

This application provides an image processing method, apparatus, and system, and an intelligent device, to increase a quantity of services supported by an ISP.

According to a first aspect, an image processing method is provided, including: obtaining first image data output by an ISP, where the first image data is obtained by the ISP by processing raw image data based on a target ISP parameter group, the first image data is used for a first service, and the raw image data is obtained by an image sensor; obtaining second image data based on the first image data, where a data volume of the second image data is greater than or equal to a data volume of the first image data and is less than or equal to a data volume of the raw image data; and obtaining third image data based on the second image data, where the third image data is used for a second service.

In this application, the first image data that is output by the ISP and that is used for the first service is processed to obtain the third image data that can be used for the second service, to expand a service corresponding to the target ISP parameter group in the ISP, so as to increase a quantity of services supported by the ISP. In addition, in a process of processing the first image data to obtain the third image data, the second image data may be first obtained based on the first image data, and then the third image data is obtained based on the second image data. The data volume of the second image data may be greater than or equal to the data volume of the first image data and may be less than or equal to the data volume of the raw image data, which means that the second image data may include more image data information than the first image data, so that quality of the third image data can be improved.

The obtaining second image data based on the first image data may also be described as: restoring the first image data to obtain the second image data. In view of this, the second image data may be the first image data, image data in the restoration process, or the raw image data obtained through restoration.

With reference to the first aspect, in some implementations of the first aspect, the obtaining second image data based on the first image data includes: restoring the first image data based on a first model, to obtain the second image data, where the first model is obtained based on a second model, and the second model is obtained through training based on an image data sample of the first service.

The image data sample of the first service may be an image data sample related to the first service. Specifically, the image data sample of the first service may include a raw image data sample obtained from the image sensor and a first image data sample obtained by the ISP by processing the raw image data sample based on the target ISP parameter group. The first image data sample may be applied to the first service.

Specifically, the second model is obtained through training based on the raw image data sample obtained by the image sensor and the first image data sample obtained by the ISP by processing the raw image data sample based on the target ISP parameter group. In a training process, the raw image data sample is used as input data for training the model, and a model parameter for training the model is continuously adjusted. When a difference between image data output by the model and the first image data sample satisfies a preset value, the second model is obtained.

The second model is an invertible model, and the first model is obtained based on an inverse transform model of the second model.

It should be understood that the obtaining second image data based on the first image data may be understood as a process of restoring the first image data.

However, because an ISP algorithm is complex, it is difficult to restore the first image data by directly performing an inverse operation based on an ISP model, to obtain the second image data. Therefore, in this application, the second model different from the ISP model is first obtained through training based on the image data sample of the first service. Then, the first model is obtained based on the second model, to restore the first image data, so that complexity of restoring the first image data can be decreased.

With reference to the first aspect, in some implementations of the first aspect, the second model is used to simulate an output of the ISP based on the image data obtained by the image sensor.

In other words, when same data is input into the second model and the ISP, a same output may be obtained. It should be understood that, because the second model is different from the ISP, in this application, a slight difference is allowed between image data output by the second model through simulation and image data output by the ISP.

With reference to the first aspect, in some implementations of the first aspect, the obtaining third image data based on the second image data includes: processing the second image data based on a third model, to obtain the third image data, where the third model is obtained through training based on a requirement of the second service.

In this application, the second image data may be processed based on the third model, to obtain the third image data, and the third model is obtained through training based on the requirement of the second service, so that quality of the third image data obtained through processing based on the third model can meet the requirement of the second service.

With reference to the first aspect, in some implementations of the first aspect, the first model includes n computing units connected in series and n+1 output ends, an output of each of the n computing units connected in series is used as an input to a next computing unit, an input to a first computing unit in the n computing units is the first image data, and one of the n+1 output ends outputs the second image data, where n is a positive integer.

The computing unit may be a radiation coupling layer.

One of the n+1 output ends is disposed at an input of the first computing unit in the n computing units, and the other n output ends are respectively disposed at outputs of the n computing units.

The first model in this application may include n computing units connected in series and n+1 output ends, and one of the n+1 output ends outputs the second image data, so that in the process of restoring the first image data, an output end that outputs the second image data may be selectively determined based on an actual requirement.

With reference to the first aspect, in some implementations of the first aspect, the first model determines, based on n+1 selection parameters, the output end that outputs the second image data, and the n+1 selection parameters are in a one-to-one correspondence with the n+1 output ends.

With reference to the first aspect, in some implementations of the first aspect, a value of each of the n+1 selection parameters is 0 or 1, a sum of the n+1 selection parameters is 1, and a value of a selection parameter corresponding to the output end that outputs the second image data is 1.

If the value of the selection parameter is 0, it indicates that output is not performed, and if the value is 1, it indicates that output is performed.

According to a second aspect, an image processing apparatus is provided, including: an obtaining module, configured to obtain first image data output by an ISP, where the first image data is obtained by the ISP by processing raw image data based on a target ISP parameter group, the first image data is used for a first service, and the raw image data is obtained by an image sensor; a first processing module, configured to obtain second image data based on the first image data, where a data volume of the second image data is greater than or equal to a data volume of the first image data and is less than or equal to a data volume of the raw image data; and a second processing module, configured to obtain third image data based on the second image data, where the third image data is used for a second service.

With reference to the second aspect, in some implementations of the second aspect, the first processing module is configured to restore the first image data based on a first model, to obtain the second image data, where the first model is obtained based on a second model, and the second model is obtained through training based on an image data sample of the first service.

With reference to the second aspect, in some implementations of the second aspect, the second model is used to simulate an output of the ISP based on the image data obtained by the image sensor.

With reference to the second aspect, in some implementations of the second aspect, the second processing module is configured to process the second image data based on a third model, to obtain the third image data, where the third model is obtained through training based on a requirement of the second service.

With reference to the second aspect, in some implementations of the second aspect, the first model includes n computing units connected in series and n+1 output ends, an output of each of the n computing units connected in series is used as an input to a next computing unit, an input to a first computing unit in the n computing units is the first image data, and one of the n+1 output ends outputs the second image data, where n is a positive integer.

With reference to the second aspect, in some implementations of the second aspect, the first model determines, based on n+1 selection parameters, the output end that outputs the second image data, and the n+1 selection parameters are in a one-to-one correspondence with the n+1 output ends.

With reference to the second aspect, in some implementations of the second aspect, a value of each of the n+1 selection parameters is 0 or 1, a sum of the n+1 selection parameters is 1, and a value of a selection parameter corresponding to the output end that outputs the second image data is 1.

According to a third aspect, an image processing apparatus is provided, including an input/output interface, a processor, and a memory. The processor is configured to control the input/output interface to receive and send a signal or information, the memory is configured to store a computer program, and the processor is configured to invoke the computer program from the memory and run the computer program, so that the image processing apparatus performs the image processing method according to any one of the first aspect or the possible implementations of the first aspect.

According to a fourth aspect, an image processing system is provided, including: an image sensor, configured to obtain raw image data; an ISP, configured to process the raw image data based on a target ISP parameter group, to obtain first image data, where the first image data is used for a first service; and N image processing apparatuses, configured to: obtain N different pieces of second image data based on the first image data, where a data volume of each of the N different pieces of second image data is greater than or equal to a data volume of the first image data and is less than or equal to a data volume of the raw image data; and obtain N different pieces of third image data based on the N different pieces of second image data, where the N different pieces of third image data are used for N different second services, and N is a positive integer greater than or equal to 1.

The N image processing apparatuses are in a one-to-one correspondence with the N different pieces of second image data, the N different pieces of second image data are in a one-to-one correspondence with the N different pieces of third image data, and the N different pieces of third image data are in a one-to-one correspondence with the N different second services.

In this application, the N image processing apparatuses may process first image data in parallel, and output, in parallel, the N different pieces of third image data used for the N different second services, so that a quantity of services supported by the ISP can be increased.

According to a fifth aspect, a computer-readable medium is provided, where the computer-readable medium stores program code, and when the program code is run on a computer, the computer is enabled to perform the image processing method according to any one of the first aspect or the possible implementations of the first aspect.

According to a sixth aspect, a computer program product is provided, including instructions, and when the instructions are run on a computer, the image processing method according to any one of the first aspect or the possible implementations of the first aspect is performed.

According to a seventh aspect, a computing device is provided, including at least one processor and a memory. The at least one processor is coupled to the memory, and is configured to read and execute instructions in the memory, to perform the image processing method according to any one of the first aspect or the possible implementations of the first aspect.

According to an eighth aspect, a chip is provided. The chip includes a processor and a data interface. The processor reads, through the data interface, instructions stored in a memory, to perform the image processing method according to any one of the first aspect or the possible implementations of the first aspect.

Optionally, in an implementation, the chip may further include the memory. The memory stores the instructions. The processor is configured to execute the instructions stored in the memory. When the instructions are executed, the processor is configured to perform the image processing method according to any one of the first aspect or the possible implementations of the first aspect.

According to a ninth aspect, an electronic device is provided, including modules configured to perform the image processing method according to any one of the first aspect or the possible implementations of the first aspect.

According to a tenth aspect, an intelligent driving device is provided, including the image processing apparatus according to any one of the second aspect or the possible implementations of the second aspect.

**BRIEF DESCRIPTION OF DRAWINGS**

FIG. 1 is a diagram of a conventional system architecture for image processing;
FIG. 2 is a diagram of a data channel of an ISP according to an embodiment of this application;
FIG. 3 is a diagram of a configuration solution of a data channel of an ISP according to an embodiment of this application;
FIG. 4 is a diagram of an image processing method according to an embodiment of this application;
FIG. 5 is a diagram of a structure of a second model according to an embodiment of this application;
FIG. 6 is a diagram of a training process of a second model according to an embodiment of this application;
FIG. 7 is a diagram of a structure of a first model according to an embodiment of this application;
FIG. 8 is a diagram of a structure of a first model according to an embodiment of this application;

FIG. 9 is a diagram of a structure of a first model according to an embodiment of this application;

FIG. 10 is a diagram of a structure of a third model according to an embodiment of this application;

FIG. 11 is a diagram of a structure of a system according to an embodiment of this application;

FIG. 12 is a diagram of a structure of another system according to an embodiment of this application;

FIG. 13 is a diagram of a structure of an image processing apparatus according to an embodiment of this application; and

FIG. 14 is a block diagram of an example of a hardware structure of an image processing apparatus according to an embodiment of this application.

## DESCRIPTION OF EMBODIMENTS

The following describes the technical solutions of embodiments in this application with reference to accompanying drawings.

The solutions of this application may be applied to the fields such as intelligent vehicles, intelligent terminals, and smart homes, for example, may be applied to a scenario in which an ISP may be used to perform image processing, for example, a smartphone, a desktop computer, a notebook computer, a tablet computer, a wearable device, a home robot, or an intelligent driving device.

The intelligent driving device may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation means like an airplane or a ship.

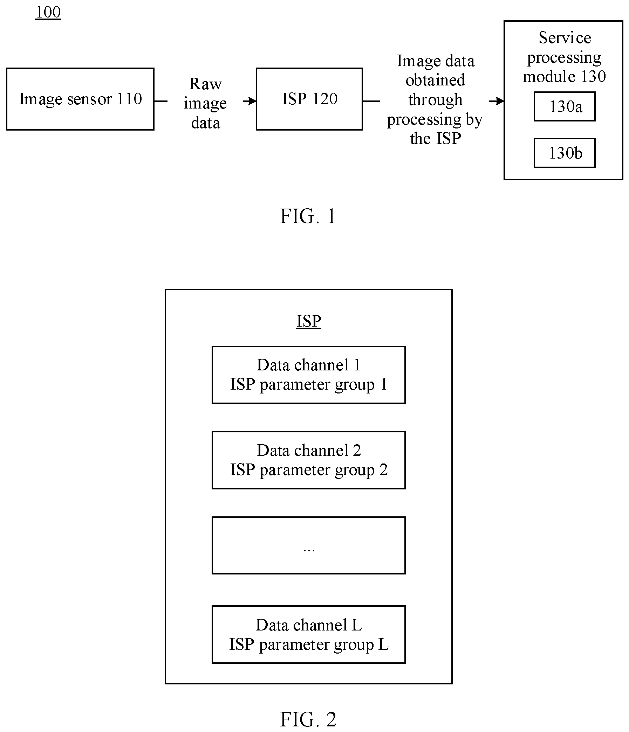

For ease of understanding, the following first briefly describes background technologies in embodiments of this application with reference to FIG. 1 to FIG. 3.

FIG. 1 is a diagram of a conventional system architecture for image processing. As shown in FIG. 1, a system architecture 100 includes an image sensor 110, an ISP 120, and a service processing module 130.

The image sensor 110 is configured to sense an external environment, obtain raw image data, and then transmit the raw image data to the ISP 120 through a serializer and a deserializer. The image sensor 110 may be, for example, a camera. The ISP 120 processes the raw image data obtained by the image sensor 110, for example, performs black level compensation, defective pixel correction, color interpolation, Bayer (bayer) noise removal, white balance correction, color reproduction correction, gamma (gamma) correction, color noise removal and edge enhancement in color space, color and contrast enhancement, and the like on the raw image data, and then transmits processed image data to the service processing module 130 for use.

The service processing module 130 is configured to process a service. There may be one or more service processing modules 130. The service may be an HV-related service or a CV-related service. For example, the system architecture 100 is applied to the vehicle field. The CV-related service may include services such as target detection, lane line detection, traffic light recognition, and semantic segmentation. The HV-related service may include services such as electronic rearview mirror data processing, surround-view stitching, and rearview camera data processing.

It should be understood that transmitting the image data obtained through processing by the ISP 120 to the service processing module 130 for use means transmitting the processed image data to a service processing module 130 corresponding to the service. For example, if the service is lane line detection, the image data obtained through processing by the ISP 120 is transmitted to a service processing module 130a related to lane line detection. If the service is electronic rearview mirror data processing, the image data obtained through processing by the ISP 120 is transmitted to a service processing module 130b related to an electronic rearview mirror.

The ISP usually includes a plurality of data channels, and one ISP parameter group may be configured for each data channel. FIG. 2 is a diagram of data channels of an ISP according to an embodiment of this application. As shown in FIG. 2, the ISP includes L data channels, and L ISP parameter groups may be configured for the L data channels. It should be understood that each ISP parameter group in the ISP may correspondingly output one piece of image data, and each ISP parameter group needs to be configured with reference to an actually applied service. Generally, different services have different requirements on image quality indicators, and an ISP parameter group configured for a service may not satisfy use of another service. For example, an ISP parameter group that is obtained through optimization by using a subjective assessment of a person as an indicator and that is applicable to the HV-related service may not satisfy use of the CV-related service.

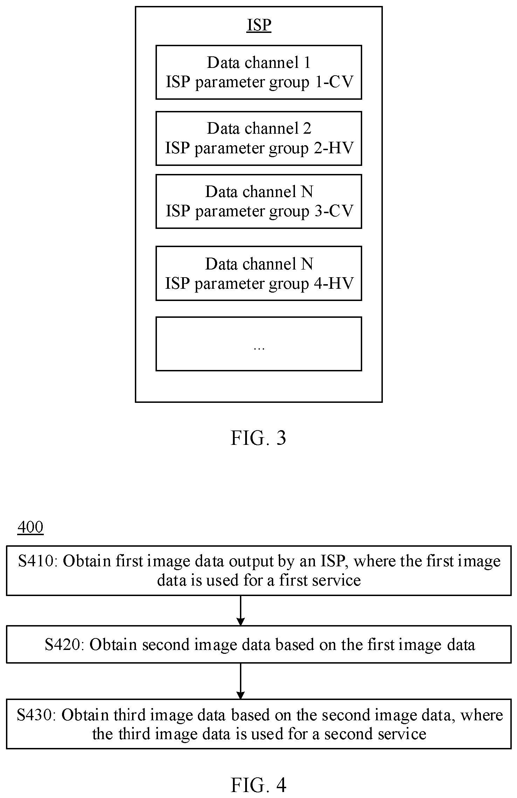

In a conventional solution, different ISP parameter groups are usually configured for different data channels of the ISP, so that image data output by the ISP based on the different ISP parameter groups can be used for different services. As shown in FIG. 3, an ISP parameter group applicable to a CV-related service may be configured for a part of the data channels, and an ISP parameter group applicable to an HV-related service may be configured for the rest of the data channels, so that image data output by the ISP can be used for different services. However, in a current case, because one data channel corresponds to only one ISP parameter group, and a quantity of data channels is limited by a bandwidth of the ISP, services supported by the ISP are limited by the quantity of data channels.

In addition, generally, one data channel of the ISP can be connected to only one image sensor, and a service may require a plurality of image sensors to simultaneously obtain image data of different angles of view. The plurality of image sensors correspond to a plurality of data channels of the ISP. In view of this, if another service is added, a data channel and an image sensor that correspond to a current service need to be occupied. Consequently, a quantity of image sensors corresponding to the current service is decreased, and obtaining of image information required by the service is affected.

In view of this, the solutions of this application provide an image processing method. Image data that is output by an ISP and that is applicable to a service is processed to obtain image data applicable to another service, to extend a service corresponding to one ISP parameter group in the ISP, so as to increase a quantity of services supported by the ISP, and ensure that a quantity of image sensors corresponding to each service is not affected.

FIG. 4 is a diagram of an image processing method according to an embodiment of this application. As shown in FIG. 4, a method 400 includes steps S410 to S430. The following describes these steps in detail.

S410: Obtain first image data output by an ISP, where the first image data is used for a first service.

The first image data is obtained by the ISP by processing raw image data based on a target ISP parameter group, and the raw image data is obtained by an image sensor.

The target ISP parameter group is an ISP parameter group for a data channel in the ISP. It should be understood that the target ISP parameter group is mainly used as an example in the solutions of this application. In an actual operation, the solutions of this application are further applicable to an ISP parameter group or ISP parameter groups for one or more other data channels in the ISP.

S420: Obtain second image data based on the first image data.

A data volume of the second image data is greater than or equal to a data volume of the first image data and is less than or equal to a data volume of the raw image data.

It should be understood that the obtaining second image data based on the first image data may also be understood as: restoring the first image data to obtain the second image data. In view of this, the second image data may be the first image data, the raw image data obtained through restoration, or image data between the first image data and the raw image data that is obtained through restoration. It should be understood that, if the second image data is the image data between the first image data and the raw image data that is obtained through restoration, compared with the first image data, the second image data has a larger data volume and may include more image data information. Compared with the process of obtaining the second image data based on the raw image data, a calculation amount, an occupied memory, and an occupied bandwidth in the process of obtaining the second image data based on the first image data may be decreased.

Optionally, the first image data may be restored based on the first model, to obtain the second image data. The first model may include n computing units connected in series and n+1 output ends, an output of each of the n computing units connected in series is used as an input to a next computing unit, an input to a first computing unit in the n computing units is the first image data, and one of the n+1 output ends outputs the second image data, where n is a positive integer.

The computing unit may be a radiation coupling layer.

One of the n+1 output ends is disposed at an input of the first computing unit in the n computing units, and the other n output ends are respectively disposed at outputs of the n computing units. Optionally, an output end that is in the n+1 output ends and that is configured to output the second image data may be determined based on a requirement of the second service. For details, refer to the following descriptions.

The first model may determine, based on n+1 selection parameters, the output end that outputs the second image data, and the n+1 selection parameters are in a one-to-one correspondence with the n+1 output ends. To be specific, the n+1 selection parameters may be used to control n output ends in the n+1 output ends not to perform output and one output end to perform output.

For example, a value of each of the n+1 selection parameters may be 0 or 1, a sum of the n+1 selection parameters is 1, and a value of a selection parameter corresponding to the output end that outputs the second image data is 1. If the value of the selection parameter is 0, it indicates that output is not performed, and if the value is 1, it indicates that output is performed.

In an implementation, the first model may be obtained based on a second model, and the second model is used to simulate an output of the ISP based on the image data obtained by the image sensor. In other words, when same data is input into the second model and the ISP, a same output may be obtained. It should be understood that, because the second model is different from the ISP, in embodiments of this application, a slight difference is allowed between image data output by the second model through simulation and image data output by the ISP.

The second model may include n computing units connected in series, an output of each of the n computing units connected in series is used as an input to a next computing unit, an input to a first computing unit in the n computing units is an input to the second model, and an output of an $n^{th}$ computing unit is an output of the second model.

The second model is obtained through training based on an image data sample of the first service. The image data sample of the first service may be an image data sample related to the first service. Specifically, the image data sample of the first service may include a raw image data sample obtained from the image sensor and a first image data sample obtained by the ISP by processing the raw image data sample based on the target ISP parameter group. The first image data sample may be applied to the first service.

Specifically, the second model is obtained through training based on the raw image data sample obtained by the image sensor and the first image data sample obtained by the ISP by processing the raw image data sample based on the target ISP parameter group. In a training process, the raw image data sample is used as input data for training the second model, and a model parameter for training the second model is continuously adjusted. When a difference between image data output in the training process of the second model and the first image data sample satisfies a preset value, the second model is obtained.

The second model is an invertible model. That the first model may be obtained based on the second model may also be described as that the n computing units, of the first model, connected in series are obtained by performing inverse transformation on the second model.

In this application, the obtaining second image data based on the first image data may be understood as a process of restoring the first image data. However, because an ISP algorithm is complex, it is difficult to restore the first image data directly based on an ISP model, to obtain the second image data. Therefore, in embodiments of this application, the second model different from the ISP model is first obtained through training based on the image data sample of the first service. Then, the first model is obtained based on the second model, to restore the first image data, so that complexity of restoring the first image data can be decreased.

For a process of constructing the second model and obtaining the first model based on the second model, refer to the following descriptions.

In another implementation, the first model may alternatively be directly obtained through training based on the image data sample of the first service. In other words, the first model may be directly obtained through training based on the image data sample of the first service. Specifically, in a training process, the first image data sample is used as input data for training the first model, a model parameter for training the first model is continuously adjusted. When a difference between image data output by the first model through training and the raw image data sample satisfies the preset value, the first model is obtained.

S430: Obtain third image data based on the second image data, where the third image data is used for a second service.

Optionally, the second image data may be processed based on a third model, to obtain the third image data, where the third model is obtained through training based on a requirement of the second service.

The requirement of the second service may include a performance requirement, a resource requirement, and the like. The performance requirement is a performance indicator requirement of a processing module related to the second service. For example, if the second service is a CV-related service, the performance requirement may be requirements on performance indicators such as accuracy, precision, and a recall rate of image data output, by using the third image data as an input, by a processing module (for example, a sensing network like a deep neural network (deep neural network, DNN)) related to the CV-related service. If the second service is an HV-related service, the performance requirement may be a requirement on a subjective assessment indicator of quality of image data output, by using the third image data as an input, by a processing module related to the HV-related service. The resource requirement may include an indicator requirement like a memory bandwidth and a data processing delay. The indicator requirement like the memory bandwidth and the data processing delay is an indicator requirement like a memory bandwidth and a data processing delay that are occupied in a process of obtaining, according to the solutions of this application, the third image data applied to the second service.

In this embodiment of this application, the second image data may be processed based on the third model, to obtain the third image data, and the third model is obtained through training based on the requirement of the second service, so that quality of the third image data obtained through processing based on the third model can meet the requirement of the second service.

Optionally, the output end that outputs the second image data may be determined and the third model may be trained based on a performance indicator of the second service. Alternatively, the output end that outputs the second image data is determined and the third model is trained based on a bandwidth memory indicator and/or a delay indicator for the first model to process the first image data and a performance indicator for processing the second service.

The third model may include p computing units connected in series, an output of each of the p computing units connected in series is used as an input to a next computing unit, an input to a first computing unit in the p computing units is the second image data, and an output of a $p^{th}$ computing unit is the third image data, where p is a positive integer.

It should be understood that a target parameter group in the ISP usually includes a large quantity of parameters. In an actual operation, a part of the parameters in the target parameter group may alternatively be used to obtain the first image data, and a function that needs to be implemented by using the rest of the parameters may be implemented through processing of the third model. This means that, in a training process of the third model, training further needs to be performed based on the function that needs to be implemented by using the rest of the parameters, to implement the function by using the third model. For example, in a process in which the ISP performs image processing, white balance correction may not be performed first, but white balance correction is implemented in a subsequent processing process of the third model.

Services in this application may include HV-related services, CV-related services, and the like. For descriptions of the HV-related service and the CV-related service, refer to the foregoing descriptions.

In view of this, the first service may be one of the HV-related services, and the second service may be one of the CV-related services. Alternatively, the first service may be one of the CV-related services, and the second service may be one of the HV-related services. Alternatively, the first service may be a first service in the HV-related services, and the second service may be a second service in the HV-related services. Alternatively, the first service may be a first service in the CV-related services, and the second service may be a second service in the CV-related services.

In embodiments of this application, the first image data that is output by the ISP and that is used for the first service is processed to obtain the third image data that can be used for the second service, to expand a service corresponding to the target ISP parameter group in the ISP, so as to increase a quantity of services supported by the ISP. In addition, in a process of processing the first image data to obtain the third image data, the second image data may be first obtained based on the first image data, and then the third image data is obtained based on the second image data. The data volume of the second image data may be greater than or equal to the data volume of the first image data and may be less than or equal to the data volume of the raw image data, which means that the second image data may include more image data information than the first image data, so that quality of the third image data can be improved.

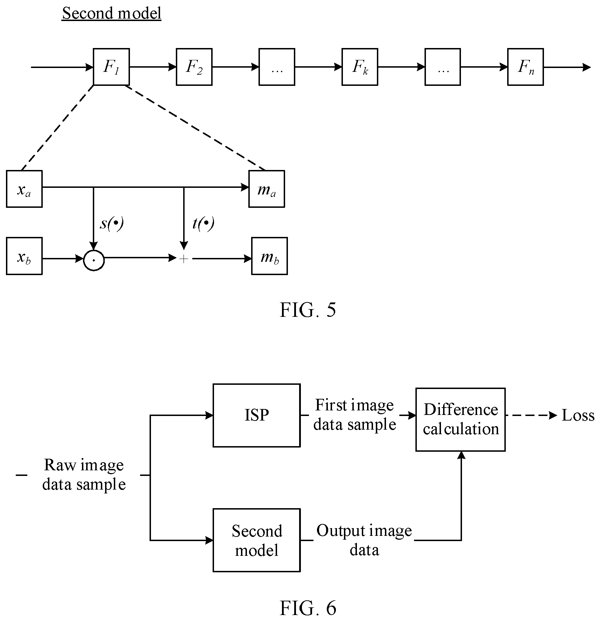

The following separately describes in detail model construction of the first model, the second model, and the third model with reference to FIG. 5 to FIG. 10 by using an example in which the computing unit is an affine coupling layer.

FIG. 5 is a diagram of a structure of the second model according to an embodiment of this application. The second model may simulate the output of the ISP based on the image data obtained by the image sensor. In embodiments of this application, the second model is constructed mainly to obtain the first model.

As shown in FIG. 5, the second model includes n affine coupling layers $\{F_1, F_2, ..., F_k, ..., F_n\}$ connected in series, an output of each of the n affine coupling layers connected in series is used as an input to a next affine coupling layer, an input to a first affine coupling layer $F_1$ in the n affine coupling layers is an input to the second model, and an output of an $n^{th}$ affine coupling layer $F_n$ is an output of the second model. The affine coupling layer has an invertible characteristic.

For a specific structure of each radiation coupling layer, refer to the affine coupling layer $F_1$ shown in FIG. 5. The specific structure may be represented by using the following formula (1):

$$m_a = x_a$$
$$m_b = s(x_a) \odot x_b + t(x_a) \qquad (1)$$

Herein, $x_a$ and $x_b$ are input data of the affine coupling layer. The affine coupling layer $F_1$ is used as an example, $x_a$ and $x_b$ are two parts of image data obtained by splitting the first image data, $m_a$ and $m_b$ are output data of the affine coupling layer, the symbol $\odot$ indicates multiplication of elements, and $s(x_a)$ and $t(x_a)$ are mapping functions. It should be understood that $s(x_a)$ and $t(x_a)$ may be linear or non-linear functions. This is not limited. For example, a representation form of $s(x_a)$ may be shown in a formula (2):

$$s(x_a) = \alpha x_a + \beta \qquad (2)$$

Herein, $\alpha$ and $\beta$ are parameters that can be trained in the second model.

It should be understood that the foregoing formula (2) is merely used as an example of $s(x_a)$. In an actual operation, another form may also be used. This is not limited. In addition, a representation form of $t(x_a)$ is similar to that of $s(x_a)$.

Based on the structure of the constructed second model, a model parameter of the second model is trained with reference to the image data sample of the first service. The image data sample of the first service may include the raw image data sample obtained from the image sensor and the first image data sample obtained by the ISP by processing the raw image data sample. The first image data sample may be applied to the first service.

The following describes an example of the training process of the second model with reference to FIG. 6. As shown in FIG. 6, the raw image data sample may be input into both the ISP and the second model, and then the first image data sample output by the ISP is compared with image data output by the second model, to obtain a difference between the output data of the ISP and the second model, and the model parameter of the second model is continuously adjusted based on the difference, until the difference between the output of the ISP and the output of the second model satisfies a preset value. In this case, training of the second model is completed.

Alternatively, a loss function (loss function) may be predefined, and the second model is trained based on the loss function. A specific form of the loss function is not limited in embodiments of this application. For example, the loss function may be shown in a formula (3):

$$ Loss = \left\| IMG_1 - IMG_2 \right\|_2 \qquad (3) $$

Herein, $IMG_1$ is the output of the ISP, and $IMG_2$ is the output of the second model.

It should be understood that a larger function value of the loss function indicates a larger difference between the output of the ISP and the output of the second model. In the training process, the function value of the loss function may be calculated based on the output of the ISP and the output of the second model, and the model parameter of the second model is continuously adjusted based on the function value of the loss function, until the function value of the loss function satisfies the preset value. In this case, training of the second model is completed.

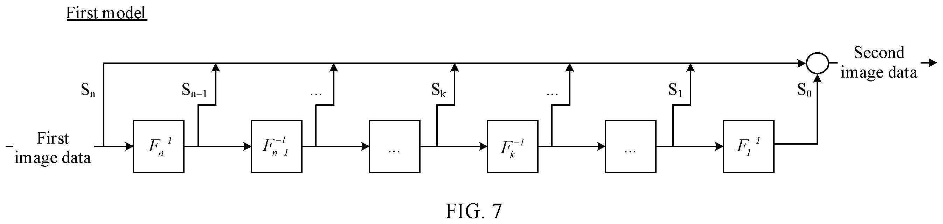

After the second model is determined, inverse transformation processing may be performed on the second model based on the invertible characteristic of the affine coupling layer, to obtain the first model, so that the first image data output by the ISP can be reversely restored based on the first model. The following describes the first model with reference to FIG. 7 to FIG. 9.

FIG. 7 is a diagram of a structure of the first model according to an embodiment of this application. The first model is mainly used to reversely restore the first image data output by the ISP, to obtain more image data information.

As shown in FIG. 7, the first model includes n affine coupling layers $\left\{ F_n^{-1}, F_{n-1}^{-1}, ..., F_k^{-1}, ..., F_1^{-1} \right\}$ connected in series and n+1 output ends, an output of each of the n affine coupling layers connected in series is used as an input to a next affine coupling layer, an input to a first affine coupling layer $F_n^{-1}$ in the n affine coupling layers is the first image data, and one of the n+1 output ends outputs the second image data, where n is a positive integer.

The n affine coupling layers $\left\{ F_n^{-1}, F_{n-1}^{-1}, ..., F_k^{-1}, ..., F_1^{-1} \right\}$ connected in series are obtained by inverting, layer by layer, the n affine coupling layers $\{F_1, F_2, ..., F_k, ..., F_n\}$ connected in series.

An $n^{th}$ affine coupling layer $F_1^{-1}$ of the first model is used as an example. The affine coupling layer is obtained by inverse the first affine coupling layer $F_1$ of the second model. In view of this, a specific structure of the affine coupling layer $F_1^{-1}$ may be represented by using the following formula (4):

$$ \begin{aligned} x_a &= m_a \\ x_b &= ( m_b - t( x_a )) / s( x_a ) \end{aligned} \qquad (4) $$

For example, refer to FIG. 7. The n+1 selection parameters $\{S_n, S_{n-1}, ..., S_k, ..., S_1, S_0\}$ may be used to determine an output end that is in the n+1 output ends and that outputs the second image data. A value of S is 0 or 1, 0 indicates that output is not performed, 1 indicates that output is performed, and $S_0 + S_1 + ... + S_n = 1$, which means that one of the n+1 selection parameters is 1, and the other selection parameters are all 0, to ensure that one of the n+1 output ends outputs the second image data.

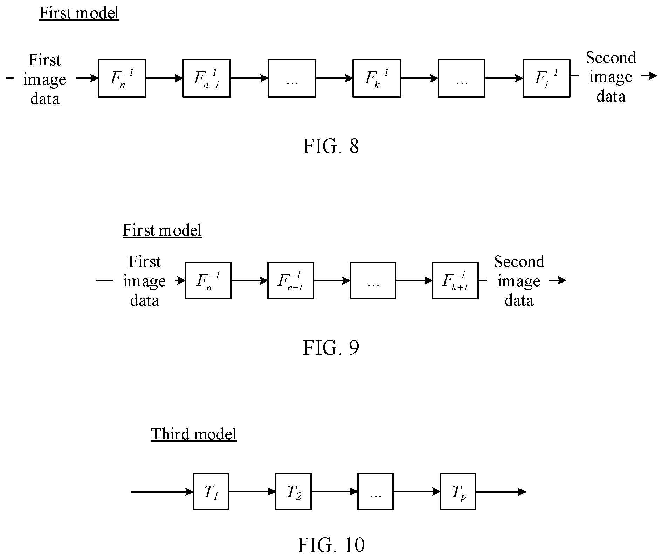

For example, if a value of $S_0$ is 1, it means that the affine coupling layer $F_1^{-1}$ outputs the second image data (refer to FIG. 8). In this case, the second image data may also be understood as the raw image data obtained through restoration.

For example, if a value of $S_k$ is 1, it means that the affine coupling layer $F_{k+1}^{-1}$ outputs the second image data (refer to FIG. 9). In this case, the second image data may also be understood as the image data between the first image data and the raw image data that is obtained through restoration.

For example, if a value of $S_n$ is 1, it means that the second image data is directly output. In this case, the image data may also be understood as the first image data.

It should be understood that parameter values of the n+1 selection parameters affect a memory bandwidth and a processing delay that are occupied when the first module processes the first image data. Specifically, if it is determined that a value of a selection parameter close to $S_0$ is 1, in an actual operation, for the input first image data, most affine coupling layers of the first model participate in calculation. In this case, more memory bandwidth is occupied, and the processing delay is long. If it is determined that a value of a selection parameter close to $S_n$ is 1, in an actual operation, for the input first image data, a few affine coupling layers of the first model participate in calculation. In this case, less memory bandwidth is occupied, and the processing delay is short.

In addition, the parameter values of the n+1 selection parameters also affect image quality of subsequent processing. Specifically, if it is determined that a value of a selection parameter close to $S_0$ is 1, in an actual operation, for the input first image data, most affine coupling layers of the first model participate in calculation, the second image data obtained through restoration has more details, and quality of an image obtained by performing post-processing based on the second image data is higher; or otherwise, quality of an image obtained by performing post-processing based on the second image data is lower.

Therefore, when the parameter values of the n+1 selection parameters are determined, the foregoing influencing factors may be comprehensively considered, and a more appropriate output end is selected to output the second image data.

Optionally, the parameter values of the n+1 selection parameters may be determined based on subjective experience, or may be jointly determined with a parameter of the third module in a subsequent process. Refer to the following descriptions.

FIG. 10 is a diagram of a structure of the third model according to an embodiment of this application. The third model is used to obtain, based on the second image data output by the first model, the third image data applicable to the second service.

As shown in FIG. 10, the third model includes p affine coupling layers $\{T_1, T_2, ..., T_p\}$ connected in series, an output of each of the p affine coupling layers connected in series is used as an input to a next affine coupling layer, an input to a first affine coupling layer $T_1$ in the p affine coupling layers is the second image data, and an output of a $p^{th}$ affine coupling layer $T_p$ is the third image data, where p is a positive integer. For a structure of each affine coupling layer, refer to the affine coupling layer $F_1$ shown in FIG. 5.

Optionally, when the values of the n+1 selection parameters are determined, a model parameter of the third model may be trained based on the performance indicator of the second service. For example, if the second service is a CV-related service, the model parameter of the third model may be trained based on a performance indicator of a processing module related to the CV-related service. If the second service is an HV-related service, the model parameter of the third model may be trained based on a subjective assessment indicator of image quality.

Optionally, when the values of the n+1 selection parameters are indeterminate, the values of the n+1 selection parameters may be determined and the model parameter of the third model may be trained synchronously based on a bandwidth memory indicator and a delay indicator for the first model to process the first image data and the performance indicator of the second service. On a basis of this, in a process of training the third model, a loss function may be predefined, and the third model is trained based on the loss function. A specific form of the loss function is not limited in embodiments of this application. For example, the loss function may be shown in a formula (5):

$$Loss = \left\| X_1 + X_2 + X_3 \right\|_2 \qquad (5)$$

Herein, $X_1$ is performance of the second service, $X_2$ is a bandwidth memory occupied by the first model to process the first image data, and $X_3$ is a processing delay generated by processing the first image data by the first model. When the second service is an HV-related service, $X_1$ is subjective performance evaluation of image quality; and when the second service is a CV-related service, $X_1$ is performance of a processing module related to the CV-related service.

Before training, an indicator value (namely, a training target) is first determined based on the bandwidth memory indicator and the delay indicator for the first model to process the first image data and the performance indicator of the second service. In the training process, the values of the n+1 selection parameters and the model parameter of the third model are continuously adjusted based on a function value of the loss function, until the function value of the loss function satisfies the foregoing indicator value. In this case, training of the third model is completed.

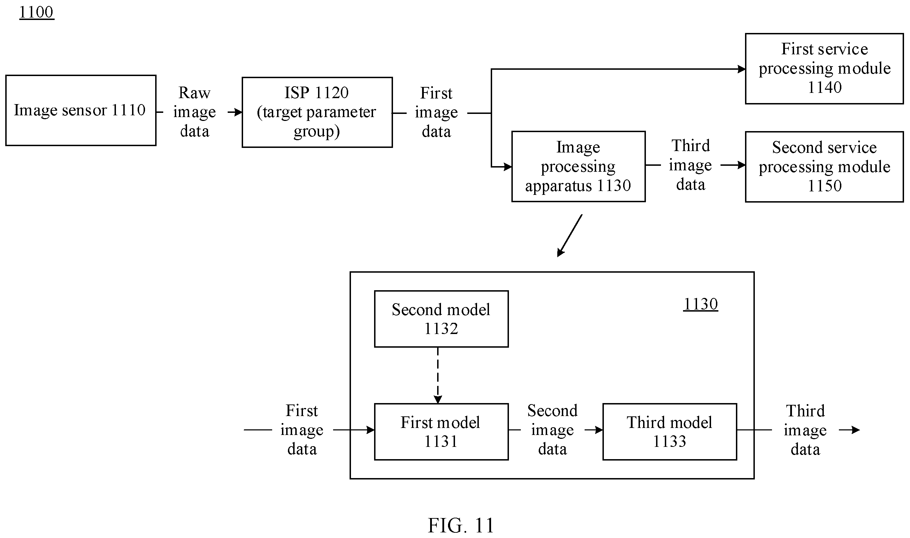

FIG. 11 is a diagram of a structure of a system according to an embodiment of this application. As shown in FIG. 11, a system 1100 includes an image sensor 1110, an ISP 1120, an image processing apparatus 1130, a first service processing module 1140, and a second service processing module 1150.

The image sensor 1110 is configured to obtain raw image data.

A target ISP parameter group is configured on the ISP 1120. The ISP 1120 processes the raw image data based on the target ISP parameter group, and outputs, to the first service processing module 1140, first image data used for a first service.

The image processing apparatus 1130 is configured to: perform the image processing method 400, to process the first image data to obtain third image data applied to a second service, and transmit the third image data to the second service processing module 1150.

The image processing apparatus 1130 may include a first model 1131 and a third model 1133. The first model 1131 is configured to process the first image data to obtain second image data, and the third model 1133 is configured to process the second image data to obtain the third image data. The first model 1131 may be obtained based on a second model 1132. For details, refer to the foregoing descriptions.

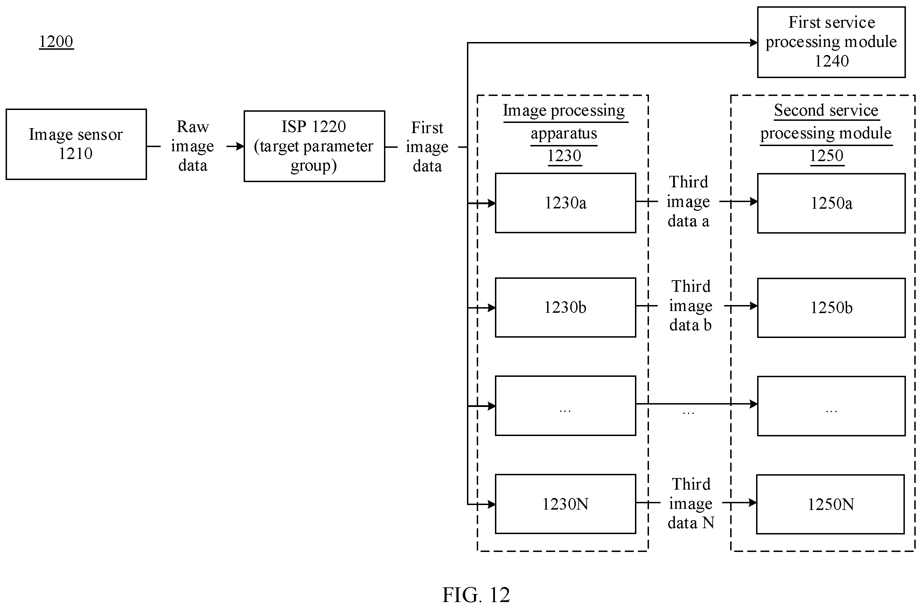

In an actual operation, a plurality of image processing apparatuses may also be configured at a back end corresponding to the target ISP parameter group of the ISP. The plurality of image processing apparatuses may simultaneously process the first image data output by the target ISP parameter group, to obtain image data that can be applied to a plurality of services. FIG. 12 is a diagram of a structure of another system according to an embodiment of this application. As shown in FIG. 12, a system 1200 includes an image sensor 1210, an ISP 1220, N image processing apparatuses 1230a to 1230N (collectively referred to as 1230), a first service processing module 1240, and N different second service processing modules 1250a to 1250N (collectively referred to as 1250).

For the image sensor 1210 and the ISP 1220, refer to the descriptions of the image sensor 1110 and the ISP 1120. Details are not described again.

The N image processing apparatuses 1230a to 1230N are configured to: obtain N different pieces of second image data based on first image data, where a data volume of each of the N different pieces of second image data is greater than or equal to a data volume of the first image data and is less than or equal to a data volume of raw image data; and obtain N different pieces of third image data (namely, third image data a to third image data N) based on the N different pieces of second image data, where the N different pieces of third image data are used for N different second services, and N is a positive integer greater than or equal to 1.

The N image processing apparatuses 1230a to 1230N are in a one-to-one correspondence with the N different pieces of second image data, the N different pieces of second image data are in a one-to-one correspondence with the N different pieces of third image data, and the N different pieces of third image data are in a one-to-one correspondence with the second service processing modules 1250a to 1250N.

In embodiments of this application, the N image processing apparatuses may process first image data in parallel, and output, in parallel, the N different pieces of third image data used for the N different second services, so that a quantity of services supported by the ISP can be increased.

Optionally, if the first service is an HV-related service, the N different second services may be N different CV-related services, or may be other N different HV-related services. The other N different services are different from the first service, or some of the other N different services are different CV-related services, and the other services are other different HV-related services. If the first service is a CV-related service, the N different second services may be N different HV-related services, or may be other N different CV-related services, or some of the N different second services are different HV-related services, and the other services are other different CV-related services. This is not limited in this application.

Optionally, each parameter group in the ISP may extend an applicable service in the foregoing manner. This is not limited in this application.

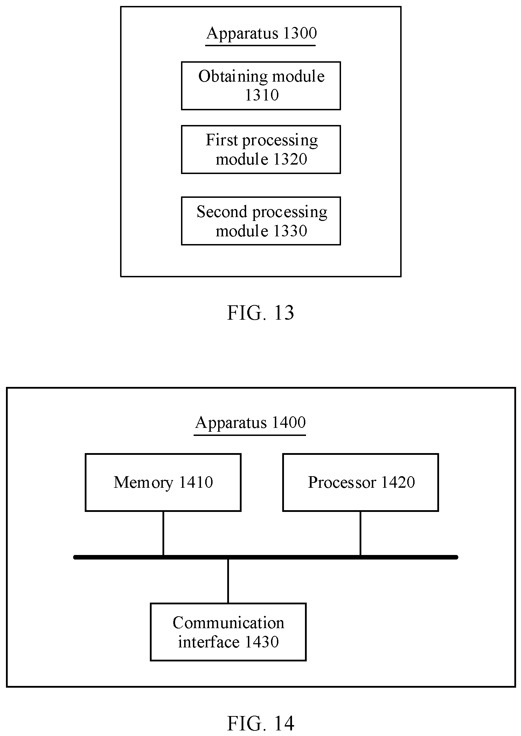

FIG. 13 is a diagram of a structure of an image processing apparatus according to an embodiment of this application. As shown in FIG. 13, an apparatus 1300 includes an obtaining module 1310, a first processing module 1320, and a second processing module 1330.

The obtaining module 1310 is configured to obtain first image data output by an ISP, where the first image data is obtained by the ISP by processing raw image data based on a target ISP parameter group, the first image data is used for a first service, and the raw image data is obtained by an image sensor.

The first processing module 1320 is configured to obtain second image data based on the first image data, where a data volume of the second image data is greater than or equal to a data volume of the first image data and is less than or equal to a data volume of the raw image data.

The second processing module 1330 is configured to obtain third image data based on the second image data, where the third image data is used for a second service.

Optionally, the first processing module 1320 is configured to restore the first image data based on a first model, to obtain the second image data. The first model may be obtained based on a second model, and the second model may be obtained through training based on an image data sample of the first service.

Optionally, the second model is used to simulate an output of the ISP based on the image data obtained by the image sensor.

Optionally, the second processing module 1330 is configured to process the second image data based on a third model, to obtain the third image data. The third model may be obtained through training based on a requirement of the second service.

Optionally, the first model may include n computing units connected in series and n+1 output ends, an output of each of the n computing units connected in series is used as an input to a next computing unit, an input to a first computing unit in the n computing units is the first image data, and one of the n+1 output ends outputs the second image data, where n is a positive integer.

Optionally, the first model determines, based on n+1 selection parameters, an output end that outputs the second image data, and the n+1 selection parameters are in a one-to-one correspondence with the n+1 output ends.

Optionally, a value of each of the n+1 selection parameters is 0 or 1, a sum of the n+1 selection parameters is 1, and a value of a selection parameter corresponding to the output end that outputs the second image data is 1.

FIG. 14 is a block diagram of an example of a hardware structure of an image processing apparatus according to an embodiment of this application. Optionally, an apparatus 1400 may be specifically a computer device. The apparatus 1400 includes a memory 1410, a processor 1420, and a communication interface 1430. The memory 1410, the processor 1420, and the communication interface 1430 may be communicatively connected to each other through a bus.

The memory 1410 may be a read-only memory (read-only memory, ROM), a static storage device, a dynamic storage device, or a random access memory (random access memory, RAM). The memory 1410 may store a program. When the program stored in the memory 1410 is executed by the processor 1420, the processor 1420 is configured to perform the steps of the image processing method 400 in embodiments of this application.

The processor 1420 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the image processing method 400 in the method embodiment of this application.

The processor 1420 may alternatively be an integrated circuit chip, and has a signal processing capability. In an implementation process, the image processing method 400 in this application may be implemented through an integrated logic circuit of hardware in the processor 1420 or instructions in a form of software.

The communication interface 1430 uses a transceiver apparatus, including but not limited to, for example, a transceiver, to implement communication between the apparatus 1400 and another device or a communication network.

An embodiment of this application further provides a computer-readable storage medium, including instructions. When the instructions are run on a computer, the computer is enabled to perform the image processing method 400.

An embodiment of this application further provides a computer program product, including instructions. When the instructions are run on a computer, the computer is enabled to perform the image processing method 400.

An embodiment of this application further provides a computing device, including at least one processor and a memory. The at least one processor is coupled to the memory, and is configured to read and execute instructions in the memory, to perform the image processing method 400.

An embodiment of this application further provides a chip. The chip includes a processor and a data interface. The processor reads, through the data interface, instructions stored in a memory, to perform the image processing method 400, or the chip performs the image processing method 400 by using a hardware circuit.

An embodiment of this application further provides an electronic device, including modules configured to perform the image processing method in any possible implementation of the image processing method 400.

An embodiment of this application further provides an intelligent device, including the image processing apparatus 1300 and/or apparatus 1400. The intelligent device may be a vehicle, a smart home device, an intelligent terminal, or the like.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

**1.** An image processing method, comprising:

obtaining first image data output by an image signal processor ISP, wherein the first image data is obtained by the ISP by processing raw image data based on a target ISP parameter group, the first image data is used for a first service, and the raw image data is obtained by an image sensor;
obtaining second image data based on the first image data, wherein a data volume of the second image data is greater than or equal to a data volume of the first image data and is less than or equal to a data volume of the raw image data; and
obtaining third image data based on the second image data, wherein the third image data is used for a second service.

2. The method according to claim 1, wherein the obtaining second image data based on the first image data comprises:
restoring the first image data based on a first model, to obtain the second image data, wherein the first model is obtained based on a second model, and the second model is obtained through training based on an image data sample of the first service.

3. The method according to claim 2, wherein the second model is used to simulate an output of the ISP based on the image data obtained by the image sensor.

4. The method according to claim 2 or 3, wherein the obtaining third image data based on the second image data comprises:
processing the second image data based on a third model, to obtain the third image data, wherein the third model is obtained through training based on a requirement of the second service.

5. The method according to any one of claims 2 to 4, wherein the first model comprises n computing units connected in series and n+1 output ends, an output of each of the n computing units connected in series is used as an input to a next computing unit, an input to a first computing unit in the n computing units is the first image data, and one of the n+1 output ends outputs the second image data, wherein n is a positive integer.

6. The method according to claim 5, wherein the first model determines, based on n+1 selection parameters, an output end that outputs the second image data, and the n+1 selection parameters are in a one-to-one correspondence with the n+1 output ends.

7. The method according to claim 6, wherein a value of each of the n+1 selection parameters is 0 or 1, a sum of the n+1 selection parameters is 1, and a value of a selection parameter corresponding to the output end that outputs the second image data is 1.

8. An image processing apparatus, comprising:

an obtaining module, configured to obtain first image data output by an image signal processor ISP, wherein the first image data is obtained by the ISP by processing raw image data based on a target ISP parameter group, the first image data is used for a first service, and the raw image data is obtained by an image sensor;
a first processing module, configured to obtain second image data based on the first image data, wherein a data volume of the second image data is greater than or equal to a data volume of the first image data and is less than or equal to a data volume of the raw image data; and
a second processing module, configured to obtain third image data based on the second image data, wherein the third image data is used for a second service.

9. The apparatus according to claim 8, wherein the first processing module is configured to:
restore the first image data based on a first model, to obtain the second image data, wherein the first model is obtained based on a second model, and the second model is obtained through training based on an image data sample of the first service.

10. The apparatus according to claim 9, wherein the second model is used to simulate an output of the ISP based on the image data obtained by the image sensor.

11. The apparatus according to claim 9 or 10, wherein the second processing module is configured to:
process the second image data based on a third model, to obtain the third image data, wherein the third model is obtained through training based on a requirement of the second service.

12. The apparatus according to any one of claims 9 to 11, wherein the first model comprises n computing units connected in series and n+1 output ends, an output of each of the n computing units connected in series is used as an input to a next computing unit, an input to a first computing unit in the n computing units is the first image data, and one of the n+1 output ends outputs the second image data, wherein n is a positive integer.

13. The apparatus according to claim 12, wherein the first model determines, based on n+1 selection parameters, an output end that outputs the second image data, and the n+1 selection parameters are in a one-to-one correspondence with the n+1 output ends.

14. The apparatus according to claim 13, wherein a value of each of the n+1 selection parameters is 0 or 1, a sum of the n+1 selection parameters is 1, and a value of a selection parameter corresponding to the output end that outputs the second image data is 1.

15. An image processing apparatus, comprising an input/output interface, a processor, and a memory, wherein the processor is configured to control the input/output interface to receive and send a signal or information, the memory is configured to store a computer program, and the processor is configured to invoke the computer program from the memory and run the computer program, for the image processing apparatus to perform the image processing method according to any one of claims 1 to 7.

16. An image processing system, comprising:

   an image sensor, configured to obtain raw image data;
   an image signal processor ISP, configured to process the raw image data based on a target ISP parameter group, to obtain first image data, wherein the first image data is used for a first service; and
   N image processing apparatuses, configured to: obtain N different pieces of second image data based on the first image data, wherein a data volume of each of the N different pieces of second image data is greater than or equal to a data volume of the first image data and is less than or equal to a data volume of the raw image data; and obtain N different pieces of third image data based on the N different pieces of second image data, wherein the N different pieces of third image data are used for N different second services, and N is a positive integer greater than or equal to 1.

17. An intelligent device, comprising the image processing apparatus according to any one of claims 8 to 15.

100

Image sensor 110 — Raw image data → ISP 120 — Image data obtained through processing by the ISP → Service processing module 130

130a

130b

FIG. 1

ISP

Data channel 1
ISP parameter group 1

Data channel 2
ISP parameter group 2

...

Data channel L
ISP parameter group L

FIG. 2

ISP

Data channel 1
ISP parameter group 1-CV

Data channel 2
ISP parameter group 2-HV

Data channel N
ISP parameter group 3-CV

Data channel N
ISP parameter group 4-HV

...

FIG. 3

400

S410: Obtain first image data output by an ISP, where the first image data is used for a first service

S420: Obtain second image data based on the first image data

S430: Obtain third image data based on the second image data, where the third image data is used for a second service

FIG. 4

Second model

FIG. 5

FIG. 6

First model

FIG. 7

First model

First image data → $F_n^{-1}$ → $F_{n-1}^{-1}$ → ... → $F_k^{-1}$ → ... → $F_1^{-1}$ → Second image data →

FIG. 8

First model

First image data → $F_n^{-1}$ → $F_{n-1}^{-1}$ → ... → $F_{k+1}^{-1}$ → Second image data →

FIG. 9

Third model

→ $T_1$ → $T_2$ → ... → $T_p$ →

FIG. 10

EP 4 580 173 A1

1100

```
┌─────────────────┐  Raw    ┌─────────────────┐  First   ┌──────────────────────┐
│ Image sensor    │  image  │ ISP 1120        │  image   │ First service        │
│ 1110            │──image─→│ (target         │──image──→│ processing module    │
│                 │  data   │ parameter       │  data    │ 1140                 │
└─────────────────┘         │ group)          │   │      └──────────────────────┘
                            └─────────────────┘   │      ┌──────────────────────┐
                                              ┌───────┐  │                      │
                                              │ Image │ Third │ Second service  │
                                              │proces-│─image→│ processing module│
                                              │ sing  │ data  │ 1150            │
                                              │appara-│       └──────────────────────┘
                                              │tus1130│
                                              └───────┘
```

```
                              ┌────────────────────────────────────────────┐
                              │  ┌──────────────┐               1130        │
                              │  │ Second model │                           │
                              │  │ 1132         │                           │
                              │  └──────────────┘                           │
                              │         ┊                                    │
   First       ┌──────────────┐  ↓  Second ┌──────────────┐   Third         │
───image──────→│ First model  │──image────→│ Third model  │──image──→       │
   data        │ 1131         │  data      │ 1133         │   data          │
               └──────────────┘            └──────────────┘                 │
                              └────────────────────────────────────────────┘
```

FIG. 11

20

FIG. 12

Apparatus 1300

Obtaining module
1310

First processing
module 1320

Second processing
module 1330

FIG. 13

Apparatus 1400

Memory 1410

Processor 1420

Communication
interface 1430

FIG. 14

## INTERNATIONAL SEARCH REPORT

| International application No. |
| --- |
| **PCT/CN2022/118958** |

| A. | CLASSIFICATION OF SUBJECT MATTER |
| --- | --- |

H04N5/222(2006.01)i; G06T5/00(2006.01)i

According to International Patent Classification (IPC) or to both national classification and IPC

| B. | FIELDS SEARCHED |
| --- | --- |

Minimum documentation searched (classification system followed by classification symbols)

IPC:H04N5/-; G06T5/-

Documentation searched other than minimum documentation to the extent that such documents are included in the fields searched

Electronic data base consulted during the international search (name of data base and, where practicable, search terms used)

CNTXT, ENTXTC, WPABSC, CNKI, VEN, USTXT, WOTXT, IEEE: ISP, 处理器, 第二, 第三, 第一, 图像, 分辨率, 质量, 数据量, 清晰度, 小, 大, 低, 高, 服务, 业务, 模拟, 模型, 训练, 应用, 原始, 源, image, processor, first, second, resolution, quality, definition, high, low, service, model, training, source

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113438418 A (OPPO GUANGDONG MOBILE TELECOMMUNICATIONS CORP., LTD.) 24 September 2021 (2021-09-24) <br> description, paragraphs 4, 23-44 and 70-82 | 1, 8, 15-17 |
| Y | CN 113438418 A (OPPO GUANGDONG MOBILE TELECOMMUNICATIONS CORP., LTD.) 24 September 2021 (2021-09-24) <br> description, paragraphs 4, 23-44 and 70-82 | 2-7, 9-14 |
| Y | US 2021183019 A1 (CANON K.K.) 17 June 2021 (2021-06-17) <br> description, paragraph 10 | 2-7, 9-14 |
| A | CN 114531564 A (LENOVO (BEIJING) CO., LTD.) 24 May 2022 (2022-05-24) <br> entire document | 1-17 |
| A | US 2021027426 A1 (BEIJING XIAOMI MOBILE SOFTWARE CO., LTD.) 28 January 2021 (2021-01-28) <br> entire document | 1-17 |
| A | US 2022103757 A1 (SNAP INC.) 31 March 2022 (2022-03-31) <br> entire document | 1-17 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 May 2023** | **19 May 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/118958**

| Patent document cited in search report | | | Publication date (day/month/year) | Patent family member(s) | | | Publication date (day/month/year) |
|---|---|---|---|---|---|---|---|
| CN | 113438418 | A | 24 September 2021 | None | | | |
| US | 2021183019 | A1 | 17 June 2021 | JP | 2020039851 | A | 19 March 2020 |
| | | | | WO | 2020049828 | A1 | 12 March 2020 |
| | | | | CN | 112638234A | A | 09 April 2021 |
| CN | 114531564 | A | 24 May 2022 | None | | | |
| US | 2021027426 | A1 | 28 January 2021 | EP | 3770847 | A1 | 27 January 2021 |
| | | | | US | 11189014 | B2 | 30 November 2021 |
| | | | | CN | 110428378 | A | 08 November 2019 |
| | | | | CN | 110428378 | B | 08 February 2022 |
| US | 2022103757 | A1 | 31 March 2022 | WO | 2022072097 | A1 | 07 April 2022 |

Form PCT/ISA/210 (patent family annex) (July 2022)